# EUROPÄISCHE PATENTANMELDUNG

(11) **EP 2 602 439 A1**
(43) Veröffentlichungstag der Anmeldung: **12.06.2013**
(21) Anmeldenummer: 11189913.4
(22) Anmeldetag: 21.11.2011
(51) Int. Cl.: F01D 25/08, F01D 25/10, F02C 7/12, F01D 5/18, F23R 3/00, F23R 3/06

(54) **Kühlbares Heißgasbauteil für eine Gasturbine**

(71) Anmelder: Siemens Aktiengesellschaft, 80333 München (DE)
(72) Erfinder: Kadau, Kai, 46519 Alpen (DE)

(57) **Zusammenfassung**

Die Erfindung betrifft ein kühlbares Heißgasbauteil (11) für eine Gasturbine mit einem Wandabschnitt (24), dessen äußere Wandfläche (26) zur Führung eines Heißgases und dessen der äußeren Wandfläche (26) gegenüberliegende innere Wandfläche (28) zur Führung eines Kühlmittels (33) vorgesehen ist, wobei an einer Teilfläche (27) der inneren Wandfläche (28) mehrere, in einem ersten Raster (R₁) angeordnete erste Turbulatoren (T₁) vorgesehen sind. Um die Kühlwirkung des entlang der inneren Wandfläche (28) strömenden Kühlmittels (33) weiter zu verbessern, ist vorgesehen, dass innerhalb der betreffenden Teilfläche (27) zweite Turbulatoren (T₂) vorgesehen sind, die sich von den ersten Turbulatoren (T₁) unterscheiden und die in einem zweiten Raster (R₂) angeordnet sind, welches sich von dem ersten Raster (R₁) unterscheidet.

## Beschreibung

Die Erfindung betrifft ein kühlbares Heißgasbauteil für eine Gasturbine mit einem Wandabschnitt, dessen äußere Wandfläche zur Führung eines Heißgases und dessen der äußeren Wandfläche gegenüberliegende innere Wandfläche zur Führung eines Kühlmittels vorgesehen ist, wobei an einer Teilfläche der inneren Wandfläche mehrere in einem ersten Raster angeordnete erste Turbulatoren vorgesehen sind.

Eingangs genannte Heißgasbauteile sind aus dem umfangreichen Stand der Technik beispielsweise in Form von Turbinenleitschaufeln, Turbinenlaufschaufeln oder auch Segmenten eines Führungsrings, die gemeinschaftlich die äußere Begrenzungswand des Heißgaspfades in der Turbine bilden, bekannt. Damit die vorgenannten Bauteile den in Betrieb der Gasturbine auftretenden Temperaturen dauerhaft standhalten können, werden diese bekanntermaßen zumeist mit Hilfe von Kühlluft im Inneren gekühlt. Um eine besonders effiziente Kühlung der Bauteile zu erreichen und somit den Verbrauch an Kühlluft zu minimieren, werden unterschiedliche Technologien eingesetzt. Zumeist kommt neben einer Prallkühlung oder einer Filmkühlung auch häufig eine konvektive Kühlung zur Anwendung. Um eine besonders effiziente konvektive Kühlung zu erreichen, ist es bekannt, dass an der inneren Wandfläche, an der die Kühlluft entlang strömt, Verwirbelungselemente zumeist in Form von Rippen angesiedelt sind. Diese verwirbeln im Betrieb das daran entlang strömende Kühlmittel, so dass stromab der Rippen die Grenzschichtdicke der Kühlluftströmung minimiert und somit ein erhöhter Wärmeübergang vom Wandabschnitt in das Kühlmittel erreicht wird.

Um dabei die Druckverluste im Kühlkanal zu verkleinern, können gemäß der WO 01/00965 A1 an einander gegenüberliegenden Seitenwänden des Kühlkanals Rippen mit unterschiedlichen Neigungen angeordnet sein, derart, dass bei einer seitlichen Projektion die Rippen einander nicht schneiden.

Aufgabe der Erfindung ist die Bereitstellung eines gekühlten Heißgasbauteils für eine Gasturbine, dessen Interieur eine besonders effiziente konvektive Kühlung hervorruft und somit mit besonders geringem Kühlmitteleinsatz kühlbar ist.

Die der Erfindung zugrundeliegende Aufgabe wird mit einem Heißgasbauteil gemäß den Merkmalen des Anspruchs 1 gelöst. Weitere vorteilhafte Maßnahmen sind in den Unteransprüchen aufgelistet und können in vorteilhafter Art und Weise miteinander kombiniert werden.

Erfindungsgemäß sind beim eingangs bezeichneten Heißgasbauteil innerhalb der betreffenden Teilfläche zweite Turbulatoren vorgesehen, die sich von dem ersten unterscheiden und bei dem die zweiten Turbulatoren in einem zweiten Raster angeordnet sind, welches sich von dem ersten Raster unterscheidet. Vorzugsweise unterscheidet sich das erste Raster vom zweiten Raster in Form und/oder Abstandsmaß. Weiter bevorzugt unterscheiden sich die ersten Turbulatoren in der Querschnittskontur und/oder in den Abmessungen von den zweiten Turbulatoren.

Der Erfindung liegt die Erkenntnis zugrunde, dass mit Hilfe zweier in unterschiedlichen Rastern angeordnete Arten von Turbulatoren - den ersten Turbulatoren und den zweiten Turbulatoren - unterschiedliche große und unterschiedlich starke Wirbel erzeugt werden. Durch die innerhalb der betreffenden Teilfläche gleichzeitig auftretenden Wirbel unterschiedlicher Skalen bzw. Ausprägung kann eine weitere gesteigerte Verwirbelung und Durchmischung des entlang strömenden Kühlmittels erreicht werden, was den Wärmeübergang von dem zu kühlenden Heißgasbauteil bzw. dessen Wand in das Kühlmittel weiter verbessert. Ein weiterer Vorteil ist, dass durch die Verwendung der Erfindung sehr lokal unterschiedliche Kühlungseigenschaften hervorgerufen werden können, um somit die höchstkritischen Stellen besser kühlen zu können als weniger kritische, d.h. im Betrieb weniger heiße Stellen.

Vorzugsweise sind die Turbulatoren rippenförmig oder sockelförmig ausgebildet. Des Weiteren ist es möglich, dass die ersten Turbulatoren rippenförmig oder sockelförmig sind und die zweiten Turbulatoren ebenso rippenförmig oder sockelförmig ausgebildet sind. Auch möglich sind Kombinationen von ersten und zweiten Turbulatoren, bei denen die eine Art rippenförmig und die andere Art sockelförmig ausgebildet sind. Auch unterschiedliche Raster können eingesetzt werden. Denkbar sind Raster in Form von Quadratgittern, Rautengitter, Hexagonalgittern oder sogar eine randomisierte Anordnung von sockelförmigen Turbulatoren mit einem mittleren Abstand. Neben den unterschiedlichen Formen von Rastern können sich diese auch nur in ihrer Geometrie unterscheiden. Sofern für die ersten Turbulatoren und die zweiten Turbulatoren sockelförmig sind, können die einerseits in Sockelhöhe und/oder andererseits im Durchmesser oder Querschnittskontur der Sockel variieren.

Gemäß einer weiteren vorteilhaften Ausgestaltung sind die zweiten Turbulatoren auf den ersten Turbulatoren angesiedelt. Durch diese Art der Kombination zweier Turbulatorarten innerhalb einer betreffenden Teilfläche ist es möglich, die Kühlluftströmung lokal unterschiedlich stark zu verwirbeln, um so die Anfachung des Wärmeübergangs aufgrund gesteigerter Turbulenz zu erreichen. Beispielsweise kann die betreffende Teilfläche nicht eben, sondern als erster Turbulator sinusförmig gewellt sein mit vergleichsweise großer Amplitude und vergleichsweise kleiner Frequenz, auf welcher Fläche dann mit vergleichsweise großer Frequenz und kleiner Amplitude eine zweite sinusförmige Kontur als zweite Turbulatoren "aufmoduliert" sind, um in der Kühlmittelströmung Wirbel unterschiedlicher Skalen zu generieren.

Weitere Vorteile und Merkmale der Erfindung werden anhand der in der Zeichnung dargestellten Ausführungsbeispiele weiter erläutert. Im Einzelnen zeigen:
- Figur 1: eine Turbinenschaufel für eine Gasturbine in perspektivischer Darstellung,
- Figur 2: eine Teilfläche einer inneren Wandfläche eines kühlbaren Heißgasbauteils mit darin angesiedelten ersten und zweiten Turbulatoren gemäß einer ersten Ausgestaltung,
- Figur 3: eine Teilfläche der inneren Wandfläche eines Heißgasbauteils mit rippenförmigen ersten und zweiten Turbulatoren und
- Figur 4: eine dritte Ausgestaltung von ersten und zweiten Turbulatoren innerhalb der Teilfläche.

In allen Figuren sind identischen Merkmale mit identischen Bezugszeichen versehen.

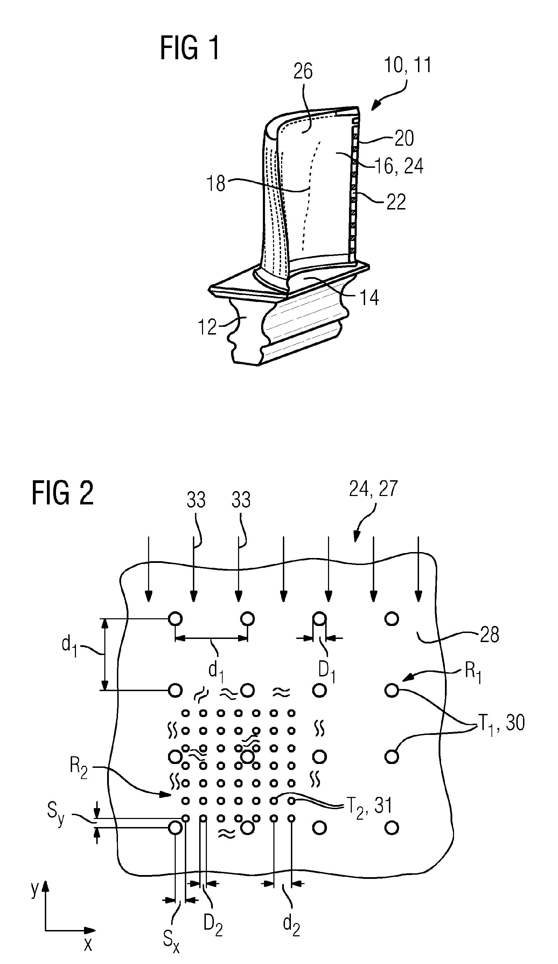

In der Figur 1 ist eine Turbinenlaufschaufel 10 beispielhaft als zu kühlendes Heißgasbauteil 11 perspektivisch dargestellt. Die Turbinenlaufschaufel 10 umfasst aufeinanderfolgend einen Schaufelfuß 12, eine Plattform 14 sowie ein daran angeordnetes Schaufelblatt 16. Die Turbinenlaufschaufel 10 ist hohl ausgebildet. Dem Hohlraum wird im Betrieb über eine im Schaufelfuß 12 unterseitig angesiedelte Öffnung Kühlmittel zugeführt. Zumeist wird als Kühlmittel Kühlluft oder Kühldampf eingesetzt. Das dem Hohlraum zugeführte Kühlmittel kann über am Schaufelblatt 16 druckseitig und/oder saugseitig angeordnete Öffnungen 18 in den Umgebungsraum - dem Heißgaskanal der Gasturbine - ausgeblasen werden, damit dieses dann als schützender Kühlluftfilm das Schaufelblatt 16 vor dem Heißgas schützt. Im gezeigten Ausführungsbeispiel sind zudem auch an bzw. in einer Hinterkante 20 des Schaufelblatts 16 angeordnete Löcher 22 vorgesehen, aus denen ebenfalls das Kühlmittel abgeführt wird.

Der Hohlraum im Schaufelblatt 16 kann beispielsweise mäanderförmig ausgestaltet sein zur Bildung mehrerer hintereinander geschalteter Kühlkanalabschnitte, wobei die Anordnung der Kühlkanalabschnitte für die Erfindung unerheblich ist.

Das Material des Heißgasbauteils 11, dessen äußere Wandfläche 26 zur Führung des Heißgases der Gasturbine und dessen der äußeren Wandfläche 26 gegenüberliegende innere Wandfläche zur Führung des Kühlmittels vorgesehen ist, bildet einen Wandabschnitt 24. Mit anderen Worten: der Wandabschnitt 24 ist einerseits ein Teil des Kühlkanals und andererseits ein Teil der Heißgasführung.

Figur 2 zeigt die Draufsicht auf eine Teilfläche 27 der inneren Wandfläche 28 des Wandabschnitts 24. Auf der inneren Wandfläche 28, welche in diesem Ausführungsbeispiel hauptsächlich eben ausgestaltet ist, sind erste Turbulatoren T₁ regelmäßig verteilt. Die regelmäßige Verteilung führt zu einem ersten Raster R₁. Im dargestellten Ausführungsbeispiel ist das Raster R₁ quadratisch mit einen Abstand d₁. Gemäß der in Figur 2 dargestellten Ausgestaltung sind die ersten Turbulatoren T₁ sockelförmig mit einem kreisrunden Querschnitt mit einem Durchmesser D₁ und einer flach endenden Sockelspitze. Die Sockel des ersten Rasters R₁ sind mit 30 beschriftet. Andere Rasterformen als quadratisch, beispielsweise rechteckig oder hexagonal, sind ebenfalls denkbar.

Innerhalb der betreffenden Teilfläche 27 sind im einen zweiten Raster R₂ zweite Turbulatoren T₂ vorgesehen, von denen der Übersicht halber nur einige dargestellt sind. Die zweiten Turbulatoren T₂ sind ebenfalls sockelförmig und im Querschnitt kreisrund. Jedoch weisen sie gegenüber den ersten Turbulatoren T₁ einen Wesentliche verkleinerten Durchmesser D₂ auf. Auch ihr Abstand d₂ der hier ebenfalls quadratisch verteilten Sockel 31 ist wesentlich kleiner als bei den ersten Turbulatoren T₁. Zudem sind die beiden Raster R₁, R₂ versetzt zueinander angeordnet: in X-Richtung um den Wert Sₓ und in Y-Richtung um den Wert Sy.

Im bestimmungsgemäßen Einsatz der Turbinenlaufschaufel 10 strömt ein Kühlmittel 33 entlang der inneren Wandfläche 28. Mit Hilfe der unterschiedlichen ersten und zweiten Turbulatoren T₁, T₂ ist es möglich, unterschiedlich große Wirbel in der Kühlluftströmung zu erzeugen und somit Turbulenzen in verschiedenen Skalen zu generieren. Durch das verbreiterte Spektrum an Wirbelgrößen wird eine weiter gesteigerte Durchmischung der Kühlluft hervorgerufen, was den Wärmeübergang zwischen dem Kühlmittel und dem Wandabschnitt 24 verbessert.

Das in Figur 2 dargestellte erste Ausführungsbeispiel der Erfindung ist - wie alle anderen auch - nicht eingeschränkt. Unterschiedliche Querschnittsformen für Sockel, unterschiedliche Rasterformen sowie unterschiedliche Abstände der einzelnen Sockel innerhalb der betreffenden Raster R₁, R₂ sind denkbar. Auch können die Raster R₁, R₂ gegeneinander verdreht sein. Des Weiteren können die Sockel der unterschiedlichen Turbulatoren auch unterschiedliche Höhen aufweisen. Selbstverständlich ist es möglich auch mehr als zwei Arten von Turbulatoren innerhalb einer betreffenden Teilfläche 27 zu verwenden, um die Bandbreite an Wirbelgrößen und Wirbelstärken noch weiter zu verbreitern. Diese weiteren Arten an Turbulatoren sind dann ebenfalls in einem weiter unterschiedlichen Raster angeordnet.

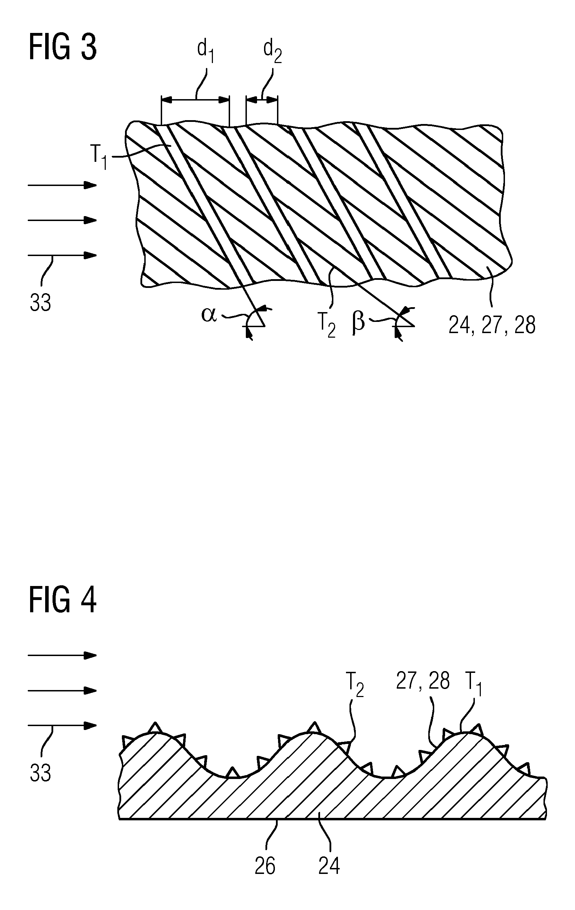

Figur 3 zeigt ein zweites Ausführungsbeispiel zur Erzeugung unterschiedlich skalierter Wirbel. Sowohl die ersten Turbulatoren T₁ als auch die zweiten Turbulatoren T₂ sind jeweils rippenförmig ausgebildet, wobei die ersten Turbulatoren T₁ jedoch eine wesentlich größere Kontur und auch ein größeres Abstandsmaß d₁ aufweisen als das Abstandmaß d₂ der zweiten Turbulatoren T₂. In Bezug auf die Hauptströmungsrichtung des Kühlmittels 33 unterscheidet sich der Anstellwinkel α der ersten Turbulatoren T₁ auch vom Anstellwinkel β der zweiten Turbulatoren T₂, wobei jedoch keiner der beiden Anstellwinkel α, β nahezu oder gleich 0° ist.

Auch hier sind ähnliche Variationen vom gezeigten Ausführungsbeispiel möglich. Selbst die Kombination von rippenförmigen Turbulatoren mit sockelförmigen Turbulatoren ist vorteilhaft.

Gemäß einem dritten und letzten Ausführungsbeispiel ist zur Erzeugung unterschiedlicher Turbulenzen in verschiedenen Skalen die innere Wandfläche 28 nicht eben, sondern wellenförmig ausgebildet ist, wobei die Wellenform schon als erster Turbulator T₁ anzusehen ist. Dieser Wellenform können beispielsweise weitere, wesentlich kleinere und häufiger angeordnete zweite Turbulatoren T₂ überlagert sein. Die gezeigten zweiten Turbulatoren T₂ sind im Querschnitt dreieckig - sie können aber auch im Querschnitt sinusförmig, rechteckig oder auch anders geformt sein.

Der Einsatz der erfindungsgemäßen Anordnung von ersten und zweiten Turbulatoren T₁, T₂ ist selbstverständlich nicht auf Turbinenlaufschaufeln 10 begrenzt. Vielmehr kann die Erfindung auch bei anderen Heißgasbauteilen einer Gasturbine angewendet werden, beispielsweise bei Turbinenleitschaufeln, Segmenten eines den Heißgaskanal begrenzenden Führungsrings oder auch bei Wandelementen einer Gasturbinen-Brennkammer.

Insgesamt betrifft die Erfindung ein kühlbares Heißgasbauteil 11 für eine Gasturbine mit einem Wandabschnitt 24, dessen äußere Wandfläche 26 zur Führung eines Heißgases und dessen der äußeren Wandfläche 26 gegenüberliegende innere Wandfläche 28 zur Führung eines Kühlmittels 33 vorgesehen ist, wobei an einer Teilfläche 27 der inneren Wandfläche 28 mehrere, in einem ersten Raster R₁ angeordnete erste Turbulatoren T₁ vorgesehen sind. Um die Kühlwirkung des entlang der inneren Wandfläche 28 strömenden Kühlmittels 33 weiter zu steigern, ist vorgesehen, dass innerhalb der betreffenden Teilfläche 27 zweite Turbulatoren T₂ vorgesehen sind, die sich von den ersten Turbulatoren T₁ unterscheiden und die in einem zweiten Raster R₂ angeordnet sind, welches sich von dem ersten Raster R₁ unterscheidet.

## Patentansprüche

1. Kühlbares Heißgasbauteil (11) für eine Gasturbine,
mit einem Wandabschnitt (24),
dessen äußere Wandfläche (26) zur Führung eines Heißgases und dessen der äußeren Wandfläche (26) gegenüberliegende innere Wandfläche (28) zur Führung eines Kühlmittels (33) vorgesehen ist,
wobei an einer Teilfläche (27) der inneren Wandfläche (28) mehrere, in einem ersten Raster (R₁) angeordnete erste Turbulatoren (T₁) vorgesehen sind,
**dadurch gekennzeichnet,**
**dass** innerhalb der betreffenden Teilfläche (27) zweite Turbulatoren (T₂) vorgesehen sind, die sich von den ersten Turbulatoren (T₁) unterscheiden und
**dass** die zweiten Turbulatoren (T₂) in einem zweiten Raster (R₂) angeordnet sind, welches sich von dem ersten Raster (R₁) unterscheidet.

2. Heißgasbauteil (11) nach Anspruch 1,
bei dem das erste Raster (R₁) sich in Form und/oder Abstandsmaß vom zweiten Raster (R₂) unterscheidet.

3. Heißgasbauteil (11) nach Anspruch 1 oder 2,
bei dem die ersten Turbulatoren (T₁) sich in der Querschnittskontur und/oder in den Abmessungen von den zweiten Turbulatoren (T₂) unterscheiden.

4. Heißgasbauteil (11) nach einem der Ansprüche 1 bis 3,
bei dem die ersten Turbulatoren (T₁) rippenförmig oder sockelförmig und
bei dem die zweiten Turbulatoren (T₂) rippenförmig oder sockelförmig ausgebildet sind.

5. Heißgasbauteil (11) nach einem der vorangehenden Ansprüche,
bei dem die zweiten Turbulatoren (T₂) auf den ersten Turbulatoren (T₁) angesiedelt sind.

6. Heißgasbauteil (11) nach einem der vorangehenden Ansprüche,
ausgebildet als Turbinenschaufel, Führungsringsegment und/oder Wandelement einer Brennkammer.
